# EUROPEAN PATENT APPLICATION

(11) **EP 1 972 754 A1**
(43) Date of publication of application: **24.09.2008**
(21) Application number: 08075205.8
(22) Date of filing: 19.03.2008
(51) Int. Cl.: F01C 21/10, F04C 18/344

(54) **Fastener member and gas compressor using the same**

(30) Priority: 20.03.2007 JP 2007071725
(71) Applicant: Calsonic Compressor Inc., Utsunomiya-shi, Tochigi 321-3231 (JP)
(72) Inventor: Masahiro, Tsuda, Sano-shi Tochigi 327-0816 (JP)
(74) Representative: Pfenning, Meinig & Partner GbR

(57) **Abstract**

In a gas compressor, a fastener part is fastened by a fastener member comprised of a bolt coated with a zincate bath and a gasket, any leakage from the fastener member is prevented, the gas compressor including a case 11 and a front head 12 fastened by a first fastener member 80, a housing 10 having a holding space in the interior portion, a compressor main body 60 that compresses gas held in the holding space and fastened to the housing 10 by a second fastener member 70, the second fastener member 70 being a fastener member comprised of a bolt 71 coated with a zincate bath in combination with a copper gasket 72 coated with tin.

## Description

### BACKGROUND OF THE INVENTION

### Field of the Invention

The present invention relates to a fastener member and a gas compressor using the fastener member, specifically, it relates to an improvement in combination between a bolt and a gasket.

### Description of the Related Art

Conventionally, in JP2005-194553A, a bolt is used as one part of a fastener member. Mainly, from the perspectives of appearance and corrosion resistance, the bolt is provided with various coatings.

Conventionally, for this coating, a chloride bath (acidic bath; coating bath with ammonium chloride as the main constituent) is generally used. But, since the chloride bath includes chloride ions, it is problematic since COD within the discharged water (Chemical Oxygen Demand), which accelerates the corrosion of the coating bath, is high.

Thereby, in recent years, from the perspective of reducing the burden on the environment or the like, there has been a gradual shift from the above-described chloride bath to a completely non cyanide zinc coating bath or zincate bath of an alkaline zinc coating and so on including zinc and sodium hydroxide (NaOH).

### SUMMARY OF THE INVENTION

However, based on the research of the inventors of the present invention, an aluminum gasket conventionally used in combination with a bolt coated in a chloride bath, when combined with a bolt coated in a zincate bath, generates more leakage than the leakage generated between a bolt coated in a chloride bath and an aluminum gasket.

The present invention takes into consideration the above situation and is intended to provide a fastener member, when in a state combined with a bolt coated in a zincate bath, in combination with a gasket that does not generate any leakage or can substantially suppress any leakage.

The present invention is intended to provide a gas compressor that does not generate leakage from the fastener member or can substantially suppress any leakage when the fastener part is fastened by the fastener member comprising the bolt coated in a zincate bath and the gasket.

A first aspect of the present invention relates to a fastener member including a blot coated with a zincate bath, and a copper gasket coated with tin combined with the bolt.

A second aspect of the present invention relates to a gas compressor including a housing having a case and a front head fastened by a first fastener member and a holding space in an interior portion thereof, and a compressor main body, which compresses gas, held in the holding space and fastened to the housing by a second fastener member, wherein at least one of the first fastener member and the second fastener member is the fastener member as described above.

### BRIEF DESCRIPTION OF THE DRAWINGS

These and other features, aspects, and advantages of the present invention will become better understood with regard to the following description, appended claims, and accompanying drawings.
FIG. 1 is a figure that illustrates a compressor 100 of a vane rotary type as an embodiment of a gas compressor according to the present invention and a cross-section along the A-A line in FIG. 3.
FIG. 2 is an enlarged figure that illustrates a part B of FIG. 1 in detail.
FIG. 3 is a side view seen from a direction of arrow C of FIG. 1.

### DETAILED DESCRIPTION OF THE INVENTION

One embodiment of a fastener member according to the present invention and one embodiment of a gas compressor using the fastener member of the one embodiment (equal to the one embodiment of the gas compressor according to the present invention) are explained hereinbelow with reference to the accompanying figures.

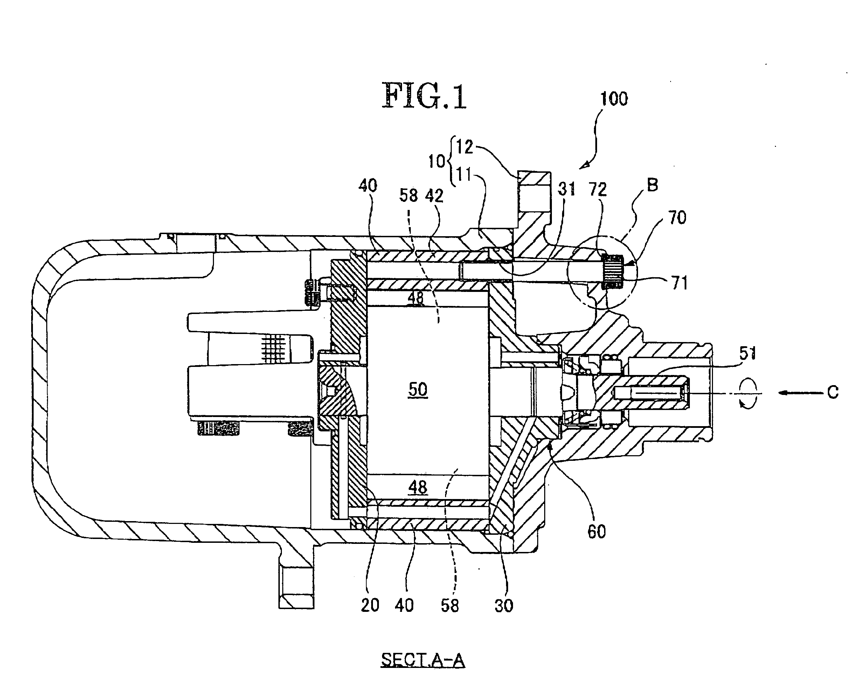

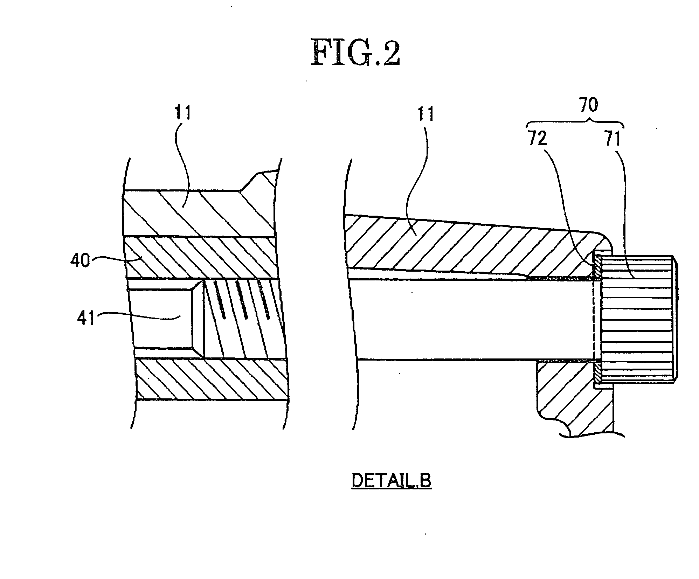

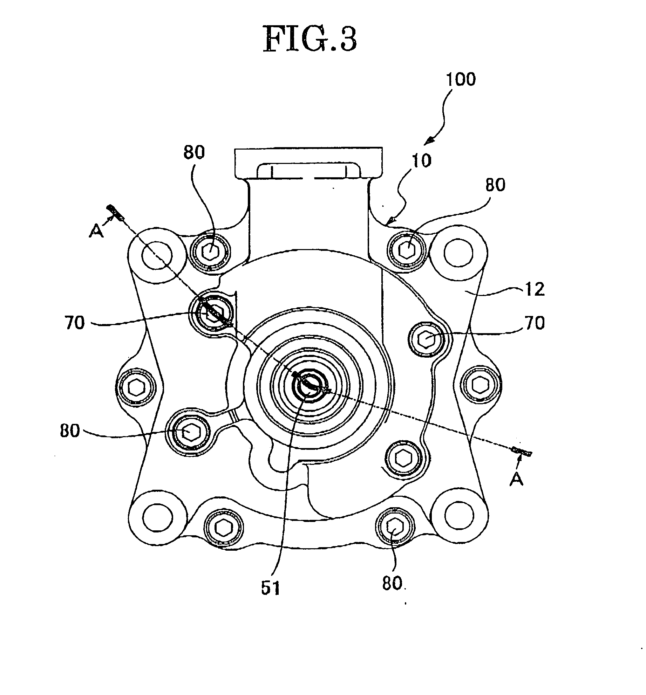

FIG. 1 is a figure that illustrates a compressor 100 of a vane rotary type as one embodiment of a gas compressor according to the present invention and a cross-section along an A-A line of a later-described FIG. 3. FIG. 2 is an enlarged diagram that illustrates a part B on FIG. 1 in detail. FIG. 3 is a side view seen from a direction of arrow C in FIG. 1.

The compressor 100 illustrated contains a compressor main body 60 that compresses gas in a holding space inside a housing 10.

The housing 10 includes a case 11 and a front head 12. The case 11 has an open end and is in an approximately cylindrical shape. The front head 12 covers the open end of the case 11 and in the inside part defines a closed holding space. The case 11 and the front head 12, as shown in FIG. 3, are fastened by six first fastener members 80 disposed at an approximately equal angle interval with a rotating axis 51 of the compressor main body 60 as the center.

In addition, the compressor main body 60 is fastened to the front head 12 by four second fastener members 70 which are disposed to correspond to four edges of a rectangle with the rotating axis 51 as the approximate center. The compressor main body 60 is retained in a predetermined position in the holding space inside the housing 10.

The compressor main body 60 includes a rotating shaft 51 rotated and driven along a shaft rotating by a transfer mechanism not illustrated that is, a rotor 50 that rotates integrally with the rotating shaft 51, a cylinder 40 with both ends open and having an inside circumference surface whose cross-section contour is in an approximate elliptical shape, encircling an external side of an outside circumference surface of the rotor 50, five vanes 58 in the form of plates disposed on the rotor 50 in intervals of equal angles around the rotating shaft 51, buried in the rotor 50 so as to freely project from the outside surface of the rotor 50, with projected ends in contact with the inside circumference surface of the cylinder 40, and a rear side block 20 and a front side block 30 fixed to the cylinder so that each covers an open end surface from an external side of the both open end surfaces of the cylinder 40.

By means of two of the consecutive vanes 58 in tandem in the rotating direction of the rotor 50, two mutually facing surfaces of the vanes 58, the inside circumference surface of the cylinder 40, the outside circumference surface of the rotor 50, and end surfaces of both of the side blocks 20, 30 (internal side end surfaces facing the rotor 50), five compressing rooms 48 that sequentially change volume accompanying the rotation of the rotor 50 are defined. In the compressing room 48 in the process of increasing volume, gas is inhaled into the compressing room 48. In the compressing room 48 in the process of decreasing volume (compression process), gas is compressed and high pressure is attained. In a terminal phase of the compression process, the gas within the compression room 48 (compression gas with high pressure) is discharged from the compression room 48 to a holding room of the housing. Furthermore, the gas is discharged from the holding room to the outside of the housing 10 so that compressed gas is supplied to the outside.

The second fastener member 70 that fastens the compressor main body 60 and the front head 12 includes a bolt 71 coated in a zincate bath in combination with a copper gasket 72 coated with tin.
A through-hole 31 that passes through in the thickness direction towards a thickness part 42 of the cylinder 40 is formed on the front side block 30. The bolt 71 fastens the front head 11 and the cylinder 40 via the through-hole 31 formed on the front side block 30. The gasket 72 is disposed in a position sandwiched by the front head 11 and the bolt 71.

The zincate coating on the bolt 71 is preferably applied at least to an area where the bolt 71 is in contact with the gasket 72 (normally, the seating surface of the bolt 71) when the bolt 71 is in a state fastened to a fastener target (the cylinder 40 of the present embodiment).

The coating of tin on the copper gasket 72 is preferably applied at least to an area where the gasket 72 is in contact with the bolt 71 (normally, the surface which the seating surface of the bolt 71 makes contact with) when the bolt 71 is in a state fastened to a fastener target (the cylinder 40 of the present embodiment).

Hardness (for example, Vickers hardness Hv) of the bolt 71 coated with the zincate coating is found to be characteristically higher than a conventionally-used bolt coated with a chloride coating by the inventors of the present application.

By this research, because the hardness on the surface of the bolt 71 coated with the zincate coating is harder than the hardness on the surface of a conventional bolt coated with the chloride coating, the coating by the zincate coating is estimated to have less elastic growth than the coating by the conventional chloride bath.

Therefore, with a bolt coated in the conventional chloride bath, the seating surface of the bolt begins to contact the surface of a gasket made of the aluminum material which is conventionally used in combination with a bolt coated in the chloride coating. When receiving frictional resistance generated between the seating surface of the bolt coated with the chloride bath and the surface of the gasket made of the aluminum material, it is thought that the coating by the chloride bath is elongated in compliance to the slide between the surfaces in contact with each other so that the coating does not easily peel off from the bolt.

On the contrary, with the bolt 71 coated with the zincate bath, the seating surface of the bolt 71 begins to contact the surface of the gasket made of the aluminum material conventionally used in combination with the bolt coated with the chloride bath. When friction is generated between the surface of the gasket made of an aluminum material and the seating surface of the bolt 71 coated with the zincate bath, the coating by the zincate bath does not elongate because of frictional resistance and peels off because of less elongation in comparison to the coating by the chloride bath. The coating of the zincate bath peeled off remains sandwiched in the gap between the surface of the gasket made of the aluminum material and the seating surface of the bolt 71.

The coating by the zincate bath remaining sandwiched in the gap between the surface of the gasket made of the aluminum material and the seating surface of the bolt 71, as described above, has a higher hardness than coating by the chloride bath. Therefore, even when the bolt 71 is in a state fastened to the cylinder 40 by prescribed torque, it was found by the inventors of the present application that the coating by the zincate bath remains uncrushed between the surface of the gasket made of the aluminum material and the seating surface of the bolt 71,

As a result, a small gap is formed between the surface of the gasket made of the aluminum material and the seating surface of the bolt 71. A mechanism to generate leaks of a fastener member including the bolt 71 coated with the zincate bath and the gasket made of the aluminum material conventionally used in combination with the bolt coated with the chloride bath was thus elucidated.

On the contrary, of the second fastener member 70 in the compressor 100 of the present embodiment, the gasket combined with the bolt 71 coated with the zincate bath is not a conventionally used gasket made of an aluminum material, but the gasket 72 made of copper coated with tin so that even when the zinc coating breaks into the gap between the surface of the copper gasket 72 coated with tin and the seating surface of the bolt 71 coated with zincate bath, a coating layer of tin is buried into the surface of the copper gasket 72 so that the second fastener member 70 operates as if the tin fills the gap around the coating of the zincate bath peeled off from the bolt 71 and broken into the gap.

As a result, the seating surface of the bolt 71 and the surface of the copper gasket 72 coated with tin are in contact with each other without any gap despite having the peeled off coating of the zincate bath.

Thereby, the second fastener member 70 by the combination of the bolt 71 coated with the zincate bath and the copper gasket 72 coated with tin does not generate any leakage between the seating surface of the bolt 71 and the surface of the gasket 72.

In such a way, the second fastener member 70 of the compressor 100 according to the present embodiment, has the bolt 71 not coated with the chloride bath. Therefore, COD within the discharged water that accelerates the corrosion of the coating bath in the manufacturing process can be lowered.

Furthermore, because the second fastener member 70 does not generate any leakage, a highly reliable compressor 100 that substantially suppresses any leakage can be provided.

The fastener member 70 used in the compressor 100 of the above embodiment is one embodiment of the fastener member according to the present invention.

The fastener member according to the present invention is not limited to those used in a gas compressor such as the compressor 100 of the above embodiment. If there is a fastener target to be fastened to the bolt of the fastener member according to the present invention, the fastener member according to the present invention can be used in anything from a fastener part of a vehicle engine to a fastener part of a vehicle transmission.

That is, if it is a fastener member including the combination of the bolt 71 coated with the zincate bath and the copper gasket 72 coated with tin, then the fastener member belongs to the technical scope of the present invention. In this situation, the bolt 71 and the gasket 72, when the bolt 71 is in a state of being fastened to the fastener target, are sufficiently applied coating in correspondence to at least each area in contact between the bolt 71 and the gasket 72. There is no need to apply the corresponding coatings to each entire area of the bolt 71 and the gasket 72.

In addition, the second fastener member 70 of the present embodiment that fastens the front head 12 and the compressor main body 60 is a fastener member by the combination of the above-described bolt coated with the zincate bath and the copper gasket coated with the tin. The first fastener member 80 that fastens the front head 12 and the case 11 can also be a fastener member by the combination of the bolt coated with the zincate bath and the copper gasket coated with the tin. The first fastener member 80 can achieve the same function and effect as the above-described second fastener member 70.

The results of an experiment performed by the inventors of the present application are described hereinbelow.

When applying a coating to a bolt, the kinds of coating bath can be mainly classified as the chloride bath and the zincate bath. The chloride bath is a coating bath with ammonium chloride as the main component and includes chloride ions. Therefore, it is characteristic that the COD concentration in the discharged water that accelerates the degree of corrosion of the coating bath is high.

On the other hand, the zincate bath includes a zinc coating bath having no cyanide or a zinc coating bath of an alkaline including zinc and sodium hydroxide (NaOH) and so on. It is characteristic that the COD concentration of the zincate bath is lower than the chloride bath. Loading against the environment of the zincate bath is also lower than the chloride bath.

The inventors of the present application conducted an experiment on the hardness, brittleness and compatibility with the gasket between a bolt coated with the zincate bath (embodiment) and a bolt coated with the chloride bath (example in comparison) and obtained the results shown in the following Table 1.

**[Table 1]**

| | | | |
|---|---|---|---|
| Bath kind | | Zincate bath | Chloride bath |
| Bath property | | Alkaline bath | Acidic bath |
| | brilliance | B | A |
| Physicality | secondary workability | B | C |
| | hardness (HV) | 100 - 140 | 50 - 80 |
| | hydrogen brittleness | B | A |
| | whisker 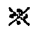 | C | C |
| Capability | electrodeposition speed | A | A |
| | uniform electrodeposition property | A | C |
| | covering coating | B | A |
| | cast metal coating | C | A |
| | Corrosion-resistance | A | B |
| | bath control | B | B |
| | withstanding preprocessing property | B | B |
| | effluent processing | A | C |
| | corrosiveness of facilities | A | C |
| gasket | aluminum material | not good | good |
| | copper material + tin coating | good | good |

| | | | |
|---|---|---|---|
| 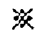 single crystal minute metallic fiber growth material | | | |

In Table 1, aptitude to the corresponding items is illustrated and becomes higher in the order of A > B > C. That is, with regard to the item of brilliance, the bolt coated with the chloride bath with an assessment of A has better brilliance than the bolt coatcd with the zincate bath with an assessment of B.

With regard to the assessment of the combination with the gasket, good indicates that there is no leakage. Not good indicates that there is leakage.

As is clear from the results of Table 1, the hardness (100 - 140) of the bolt coated with the zincate bath was higher than the hardness (50 - 80) of the bolt coated with the chloride bath

In terms of the relationship with a conventional gasket made of the aluminum material, the fastener member by the combination with the bolt coated with the chloride bath does not generate any leakage, but the fastener member by the combination with the bolt coated with the zincate bath generates leakage.

By further examining the reasons for the leakage generated, as illustrated in Table 2, it was found that the fastener member by the combination of the bolt coated with the zincate bath and the gasket made of the aluminum material had 3 times the concentration of the zinc component (the component of the coating) adhered to the gasket made of the aluminum material in comparison to the fastener member by the combination of the bolt coated with the chloride bath and the gasket made of the aluminum material. As a result, because the hardness of the coating by the zincate bath was harder than the hardness of the coating by the chloride bath, the coating by the zincate bath peels off at the seating surface of the bolt and remains on the surface of gasket made of aluminum material. Therefore, a mechanism to generate leakage that does not occur in a fastener member by the bolt coated with the conventional chloride bath in combination with a gasket made of aluminum material was clarified.

**[Table 2]**

| Bath kind | Zinc concentration |
|---|---|
| Zincate bath | 3% |
| Acidic bath | 1% |

On the other hand, in terms of the relationship of a copper gasket coated with tin, even as a fastener member in combination with the bolt coated with the zincate bath, leakage was not generated (refer to table 1).

The effectiveness of the fastener member according to the present invention was thus confirmed.

A fastener member according to the present invention, in a state combined with a bolt coated with a zincate bath, does not generate any leakage or can substantially suppress any leakage.

Also, when a fastener part of a gas compressor according to the present invention is fastened by a fastener member including a bolt coated with zincate bath and a gasket, the fastener member does not generate any leakage or can substantially suppress any leakage.
While preferred embodiments of the invention have been described and illustrated above, it should be understood that the above embodiment is exemplary of the invention and are not to be considered as limiting. Additions, omissions, substitutions, and other modifications can be made without departing from the sprit or scope of the present invention. Accordingly, the invention is not to be considered as being limited by the foregoing description, and is only limited by the scope of the appended claims.

## Claims

1. A fastener member, comprising:
a blot (71) coated with a zincate bath; and
a copper gasket (72) coated with tin combined with the bolt.

2. A fastener member according to Claim 1, wherein
the bolt (71) and the gasket (72) are each applied with corresponding coatings at least in areas in which the bolt (71) and the gasket (72) are in contact with when the bolt (71) is in a state fastened to a fastener target.

3. A fastener member according to Claim 1 or Claim 2, wherein
a hardness (HV) of the coating of the bolt (71) by the zincate bath is 100 - 140.

4. A gas compressor, comprising:
a housing (10) having a case (11) and a front head (12) fastened by a first fastener member (80) and a holding space in an interior portion thereof; and
a compressor main body (60) which compresses gas, held in the holding space and fastened to the housing (10) by a second fastener member (70), wherein
at least one of the first fastener member (80) and the second fastener member (70) is the fastener member according to one of Claim 1 through Claim 3.

5. A gas compressor according to Claim 4, wherein
the compressor main body (60) comprises a rotor (50) that rotates integrally with a rotating shaft (51), a cylinder (40) having both ends opened and an inside circumference surface which encircles an external side of a circumference surface of the rotor whose cross-section contour is in an approximate elliptical shape, a vane (58) in the form of a plate buried in the rotor (50) whose projection quantity from the outside circumference surface of the rotor (50) is variable so that the edge on the side of the projection adheres to the inside circumference surface of the cylinder (40) and a side block that covers the edge surface of the rotor (50) and the edge surface of the cylinder (40) from the edge surface side of the cylinder (40), wherein
a through-hole that passes through in a thickness direction towards a thickness part of the cylinder (40) is formed on the side blocks (20, 30), and
the second fastener member (70) is the fastener member according to one of Claim 1 through Claim 3, and the second fastener member (70) fastens the front head (12) and the cylinder (40) via the through-hole formed in the side blocks (20, 30).
